# EUROPÄISCHE PATENTSCHRIFT

(11) **EP 4 218 508 B1**
(45) Veröffentlichungstag und Bekanntmachung des Hinweises auf die Patenterteilung: **25.02.2026**
(21) Anmeldenummer: 23151992.7
(22) Anmeldetag: 17.01.2023
(51) Int. Cl.: A47J 31/36

(54) **EINRICHTUNG ZUR ERZEUGUNG EINES GETRÄNKS, INSBESONDERE KAFFEE**
DEVICE FOR PRODUCING A BEVERAGE, IN PARTICULAR COFFEE
DISPOSITIF POUR LA PRÉPARATION D'UNE BOISSON, EN PARTICULIER DU CAFÉ

(30) Priorität: 26.01.2022 CH 802022
(43) Veröffentlichungstag der Anmeldung: 02.08.2023
(73) Patentinhaber: Starbucks Corporation, Seattle, WA 98134-1435 (US)
(72) Erfinder: STEINER, Adrian, 6353 Weggis (CH)
(74) Vertreter: Gill Jennings & Every LLP

(56) Entgegenhaltungen:
- EP-A1- 0 528 759
- WO-A1-2021/115792
- DE-U1- 202005 020 774

## Beschreibung

Die Erfindung betrifft eine Einrichtung zur Erzeugung eines Getränks, insbesondere Kaffee, nach dem Oberbegriff des Anspruchs 1.

Eine bekannte Antriebsvorrichtung gemäss der Druckschrift EP 0 528 759 A1 umfasst eine Antriebsspindel und mindestens ein Trägerelement, das mit einem Brühzylinder einer Brüheinheit verbunden ist. Das Trägerelement weist auf der dem Spindelgewinde zugewandten Seite Teilgewindegänge auf, die in das Spindelgewinde eingreifen. Dadurch, dass das Trägerelement den Umfang der Antriebsspindel nur teilweise umschliesst, können mehrere Brüheinheiten gleichmässig um den Umfang der Antriebsspindel verteilt angeordnet und von letzterer gemeinsam vorangetrieben werden. Beim Drehen der Antriebsspindel in der einen oder anderen Richtung werden die Brühzylinder in vertikaler Richtung gegen das eine oder das andere Ende der Antriebsspindel und zum Erreichen einer Brühstellung sind sie nach oben zu den ersten Kolben hin verschiebbar. Nachdem vorgängig die Einfülltrichter nach aussen verschwenkt worden sind, gleiten die Brühzylinder über die ersten Kolben hinweg, wobei in jedem der Brühzylinder eine Brühkammer gebildet wird. Der untere Schaft wird bei dieser Verschiebebewegung von seinen zugeordneten Stutzen abgehoben. Heisses Wasser wird unter Druck in die Brühkammern geleitet und durchströmt das in der letzteren vorhandene Kaffeepulver. Der erzeugte Kaffee wird über die zweiten Anschlussnippel abgeleitet.

In der Druckschrift WO 2021/115792 A1 ist eine Einheit zur Zubereitung von Getränken durch Aufbrühen einer Portion eines Brühgutes offenbart, die mindestens einen Aufnahmebehälter mit einer Brühkammer umfasst, wobei die Brühkammer von einer beweglichen Platte mit einer Öffnung abgedeckt ist, die selektiv gegenüber einer Öffnung des jeweiligen Aufnahmebehälters der Brühkammer platziert werden kann, um die Brühkammer abhängig von der Position der Öffnung zu öffnen oder zu schliessen. Die jeweilige Brühkammer umfasst ein Dichtungselement, um zwischen der Randzone der Mündung der Brühkammer und einer Unterseite der Platte abzudichten. Es ist ein Steuersystem der Platte vorgesehen, das so konfiguriert ist, dass es die Platte rotiert und einen Wert ermittelt, der die Rotationsgeschwindigkeit der Platte bestimmt.

Bei einer bekannten Kaffeemaschine gemäss der Druckschrift DE 20 2005 020 774 U ist ein Revolvermechanismus mit mehreren Brühkammern, einer Beschickungsstation, einer Brühstation und einer Entleerungsstation vorgesehen, die dabei derart nacheinander beim Revolvermechanismus angeordnet sind, dass durch eine Rotation desselben die Brühkammern jeweils schrittweise nacheinander von der Beschickungsstation zur Brühstation und weiter zur Entleerungsstation geschwenkt werden. Damit kann in die eine Brühkammer Kaffeepulver eingefüllt und gleichzeitig in der um 90° versetzten Brühkammer, in der vorgängig Pulver eingefüllt worden ist, gebrüht und das erzeugte Kaffeegetränk unten rausgelassen werden. Dies ermöglicht an sich eine erhöhte Mengenleistung von Kaffeegetränken. Die Beschickungsstation, die Brühstation und die Entleerungsstation sind als separate Einheiten platzaufwändig und prinziphaft ausgebildet, bei denen die Abdichtungen bei den Brühkammer-Trägern jeweils nicht dauerhaft gewährleistet sind.

Ausgehend von dieser bekannten Kaffeemaschine liegt der Erfindung die Aufgabe zugrunde, eine Einrichtung bzw. eine Kaffeemaschine nach der erwähnten Gattung derart weiterzuentwickeln, dass eine automatisierte Erzeugung von Kaffee mit einer erhöhten Mengenleistung mittels einer kompakten und einfachen Konstruktion der Einrichtung erzielt wird.

Diese Aufgabe ist erfindungsgemäss durch die Merkmale des Anspruchs 1 gelöst.

Es sind bei dieser Einrichtung erfindungsgemäss oberhalb bei den karussellartig verdrehbaren Brühzylinder mindestens zwei Zufuhrkanäle und zwei beabstandet zu diesen angeordnete Extraktionskolben vorgesehen, wobei in einer bestimmten Position der Brühzylinder die Zufuhrkanäle jeweils zumindest oberhalb eines Brühzylinders für das Beschicken des Getränkepulvers anschliessbar sind, in welche je ein Kolben (31) von unten einschiebbar ist, während die Extraktionskolben jeweils in einen Brühzylinder neben dem beschickbaren Brühzylinder ein- oder ausschiebbar angeordnet sind.

Mit dieser erfindungsgemässen Ausbildung der Einrichtung können sehr effizient mit jeder karussellartigen Verdrehung der Brühzylinder zumindest zwei Brühzylinder mit Getränkepulver gefüllt und gleichzeitig zumindest zwei Portionen Kaffee erzeugt und ausgelassen werden. Damit können taktweise Getränke durch zwei Auslässe trinkfertig in einen oder vorzugsweise mehrere Behälter, wie Tassen, gefüllt werden, bei dem nur kurze Unterbrüche des Getränkeauslasses beim Wechsel der beschickten Brühzylinder in die um 60° gedrehte Extraktionspositionen und beim Zurückbewegen der Kolben entstehen.

Sehr vorteilhaft sind die achsparallel zueinander angeordneten Brühzylinder kreisförmig um die Drehachse in einem Karussell gehalten und in einer vertikalen Führung gegen die Zufuhrkanäle und die Extraktionskolben hin bzw. von diesen weg bewegbar.

Vorzugsweise sind sechs Brühzylinder mit je einem Abstand von 60° zueinander am Tragelement des Karussells gehalten, wobei die zwei Zufuhrkanäle und die zwei Extraktionskolben in einer bestimmten Position derselben mit je einem Brühzylinder zusammenwirken, die zueinander um 180° versetzt gegenüberliegen.

Zweckmässigerweise ist ein unterhalb der Brühzylinder positioniertes Schwenkorgan mit den mindestens zwei Kolben an derselben vertikalen Führung wie das Karussell auf- und abbewegbar, wobei dieses Schwenkorgan durch ein Antriebselement höhenverstellbar und ausserdem von einem zusätzlichen Antriebsorgan drehbar ist.

Vorteilhaft ist dabei als Antriebselement des Schwenkorgans eine vertikale Antriebsspindel im Zentrum der Einrichtung vorgesehen, welche mit dem Schwenkorgan drehverbunden ist und sich vorzugsweise von einer unteren Grundplatte durch das Schwenkorgan und das Tragelement bis zu einem Drehantriebsorgan erstreckt.

Als weiterer Vorteil ist das Karussell mit den Brühzylindern von mit diesem wirkverbundenen Schwenkorgan durch die Kolben absenkbar und in die jeweils nächste Position verdrehbar und hochschiebbar. Damit können mit nur zwei Antrieben sämtliche Bewegungen der Einrichtung ausgeführt werden.

Beim Beschicken des Getränkepulvers sind die beiden Kolben des Schwenkorgans in je einen der Brühzylinder eingeschoben, wobei sie in diesen Brühzylindern in dem eingeschobenen Zustand verbleiben, wenn das Schwenkorgan und mit ihm die Brühzylinder abgesenkt, in die nächste Position verschwenkt und die von den Kolben unterseitig geschlossenen Brühzylinder jeweils in den Extraktionskolben eingeschoben werden. Dieses gemeinsame Absenken, Verschwenken und Hochschieben, das alleine durch Betätigen des Schwenkorgans erfolgt, ermöglicht ebenso ein sehr einfaches Steuern der Einrichtung.

Nach dem Extrahieren erfolgt ein Herausbewegen und Wegschwenken der Kolben des Schwenkorgans aus dem jeweiligen Brühzylinder durch ein Arretieren des Karussells und mit ihm der Brühzylinder auf einer bestimmten Höhe. Dies trägt ebenfalls für die einfache Konstruktion der Einrichtung bei.

Die Erfindung sowie weitere Vorteile derselben sind nachfolgend anhand von Ausführungsbeispielen unter Bezugnahme auf die Zeichnung näher erläutert. Es zeigt:
- Fig. 1: eine perspektivische Explosionsansicht einer erfindungsgemässen Einrichtung;
- Fig. 2: eine perspektivische Ansicht der Einrichtung nach Fig. 1 in ausgefahrener Stellung;
- Fig. 3: einen Längsschnitt der Einrichtung nach Fig. 1 mit dem einen Brühzylinder links beim Beschicken des Getränkepulvers und dem andern rechts beim Ausstossen eines Getränkekuchens;
- Fig. 4: einen Längsschnitt der Einrichtung nach Fig. 1 beim abgesenktem Brühzylinder mit dem Getränkepulver und dem unteren Kolben darin, die zusammen in die nächste Position nach rechts gedreht werden; und
- Fig. 5: einen Längsschnitt der Einrichtung nach Fig. 1 mit dem Brühzylinder rechts mit Getränkepulver, dem eingeschobenen Extraktionskolben oben und dem unteren Kolben darin in der Extraktionsposition.

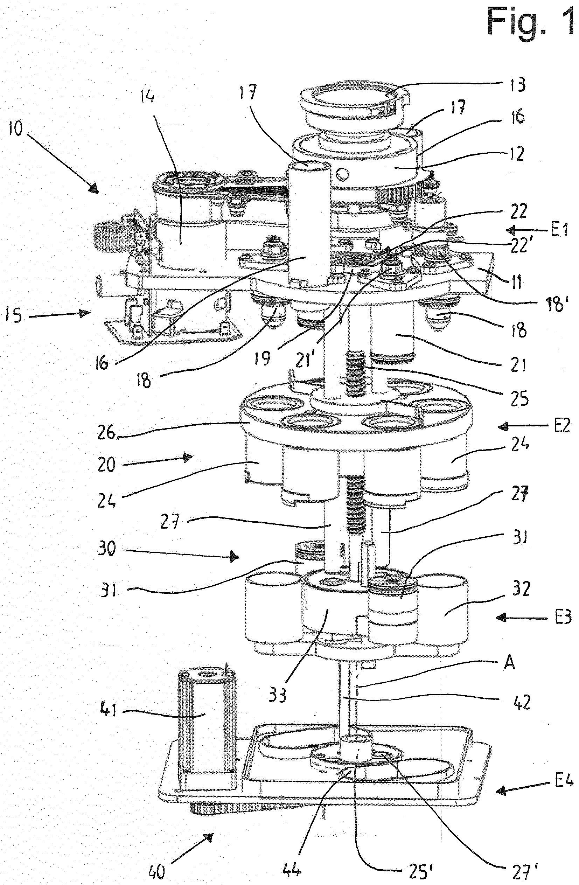

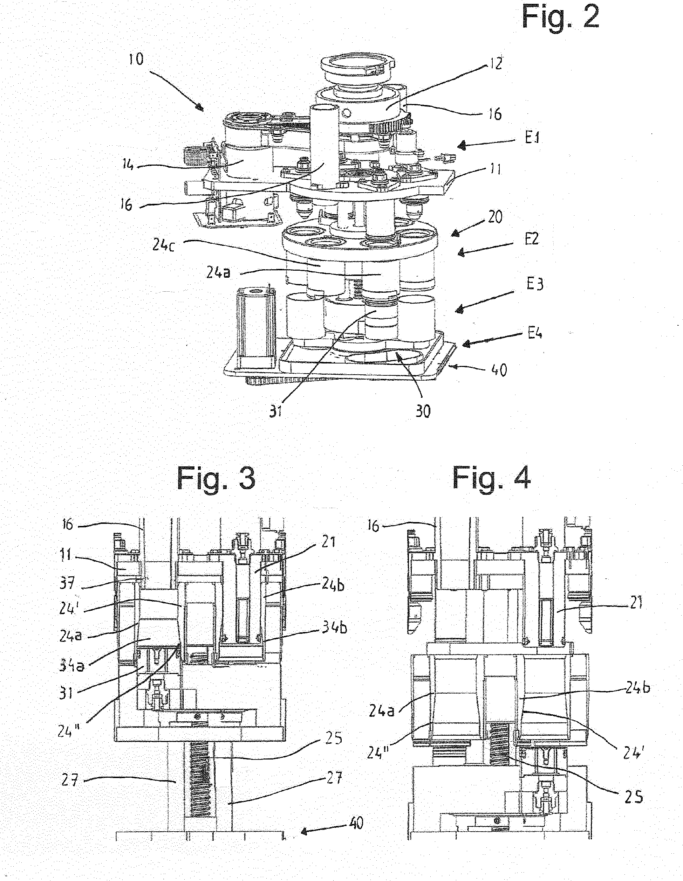

Fig. 1 und Fig. 2 zeigen eine Einrichtung 10 zur Erzeugung eines Getränks, insbesondere Kaffee, welches durch einen Auslass in einen Behälter, wie zum Beispiel eine Kanne oder eine Tasse, geleitet werden kann. Sie eignet sich vorteilhaft zum Brühen und Erzeugen von heissem Kaffee. Es könnte aber auch kalter Kaffee erzeugt werden, bei dem in den Brühzylindern, die allgemein mit dem Bezugszeichen 24 versehen sind, nicht gebrüht würde, sondern nur extrahiert.

Eine solche Einrichtung 10 kann als eine Kaffeemaschine ausgebildet sein, die mit einem herkömmlichen Gehäuseaufbau versehen wäre und zumindest ein Bedienungstableau mit Display, einen Bohnenbehälter, eine Wasserzufuhr bzw. Abfuhr, einen Milchbehälter, einen Milchschaumerzeuger, Auslässe und weitere Bestandteile aufweisen könnte, was nicht näher dargestellt ist. Diese Einrichtung 10 kann aber ebenso als mindestens ein separates Modul ausgebildet sein.

Anstelle von Kaffee können mit dieser Einrichtung 10 auch andere Getränke, wie Mischgetränke, erzeugt werden, bei denen anstelle von Kaffeepulver ein gemischtes oder ein anderes Pulver aus einem oder mehreren separaten Behältern zuführbar wäre, wie zum Beispiel Schokoladepulver oder ähnliches.

Bei dieser erfindungsgemässen Einrichtung 10 ist eine Struktur vorgesehen, die in vier unabhängig voneinander angeordneten Ebenen E1 bis E4 unterteilt ist. In der obersten Ebene E1 der Struktur ist eine vorzugsweise modulare Einheit 15 positioniert, die stationär angeordnet ist. Dieser Einheit 15 sind eine Basisplatte 11, ein auf dieser befindliches Mahlwerk 12 mit einem Antrieb 14, von diesem wegführende Verbindungsstücke 17, zwei Zuführkanäle 16, ein Drehantriebsorgan 22 für ein Antriebselement, je zwei sich nach unten erstreckende Extraktionskolben 21 und Spülkolben 18 zugeordnet. Durch die Verbindungsstücke 17 und die zwei Zuführkanäle 16 wird das Getränkepulver portionenweise in die Brühzylinder 24 geleitet.

Dieses Drehantriebsorgan 22 weist ein von einem Zahnriemen 19 drehbares Abtriebsrad 22' auf, das mit dieser in der Basisplatte 11 oberseitig gelagerten vertikalen Antriebsspindel 25 als Antriebselement gekoppelt ist. Der Zahnriemen 19 ist mit einem nicht näher gezeigten Antriebsrad eines Motors drehverbunden. Zudem sind neben der Antriebsspindel 25 parallel zu ihr angeordnete Gleitführungen 27 vorgesehen, die oberseitig bei der Basisplatte 11 befestigt sind.

In der zweiten Ebene E2 der Struktur unterhalb der Ebene E1 ist ein Karussell 20 mit sechs achsparallel zueinander kreisförmig um eine Drehachse A rotierbare Brühzylinder 24, ein diese haltendes Tragelement 26 und eine vertikale Gleitführung 27 angeordnet. Dieses Karussell 20 ist innerhalb der Brühzylinder entlang dieser Gleitführung 27 von einer unteren, wie in Fig. 2 ersichtlich ist, in eine obere Stellung bis gegen die Zufuhrkanäle 16 unterhalb der Basisplatte 11 hin und von diesen weg bewegbar. Die sechs Brühzylinder 24 sind mit je einem Abstand von 60° zueinander am scheiben- oder andersförmigen Tragelement 26 gehalten. Die zwei Zufuhrkanäle 16 und die zwei Extraktionskolben 21 sind derart in der Basisplatte 11 angeordnet, dass sie mit zwei Brühzylindern 24 zusammenwirken, die zueinander um 180° versetzt gegenüberliegen.

In der dritten Ebene E3 unterhalb des Karussells 20 ist ein ebenfalls in dieser Gleitführung 27 höhenverstellbares Schwenkorgan 30 mit zwei schwenkbaren Kolben 31 und zwei neben diesen platzierten Schalen 32 angeordnet. Dieses Schwenkorgan 30 ist dabei mit der Antriebsspindel 25 drehverbunden und wird beim Rotieren von letzterer nach oben oder nach unten verstellt. Die beiden Kolben 31 sind mittels einem um das Schwenkorgan 30 greifenden Lagerring 33 schwenkbar um die Drehachse A gelagert und dabei derart positioniert, dass sie jeweils in einen bestimmten Brühzylinder 24 ein- oder aus diesem herausschiebbar sind. Zudem sind die Kolben 31 jeweils mit einer zentralen Bohrung 31' für das Auslassen des erzeugten Getränks aus der im Brühzylinder 24 gebildeten Extraktionszelle versehen.

In der vierten Ebene E4 der Struktur ist unterhalb des Schwenkorgans 30 eine stationäre Auffangschale 40 mit einer nicht näher gezeigten Schublade für das Sammeln der Getränkekuchen, wie zum Beispiel von Kaffeesatz, angeordnet. Diese Auffangschale 40 ist wie die modulare Einheit 15 stationär in einem Gehäuse oder dergleichen wegnehmbar positioniert. Es ist seitlich bei ihr ein Antriebsmotor 41 vorgesehen, welcher mit dem Lagerring 33 über eine nicht näher gezeigte Transmission mit einer Antriebsachse 42 wirkverbunden ist und ein gesteuertes Schwenken der Kolben 31 ermöglicht. Zudem sind die Antriebsspindel 25 und die Gleitführungen 27, die sich von der Basisplatte 11 durch das Karussell 20 und das Schwenkorgan 30 bis zur Auffangschale 40 erstrecken, unterseitig in Lagerelementen 25', 27' in dieser Auffangschale 40 gelagert.

Erfindungsgemäss sind die zwei Zufuhrkanäle 16 in einer bestimmten Position der Brühzylinder 24 jeweils oberhalb eines Brühzylinders 24 für das Beschicken des Getränkepulvers anschliessbar und von unten ist je ein Kolben 31 in diese Brühzylinder 24 einschiebbar, während die Extraktionskolben 21 jeweils in einen Brühzylinder 24 neben dem beschickbaren Brühzylinder 24 ein- oder ausschiebbar angeordnet sind.

Mit dieser Anordnung ist es möglich, dass in zwei Brühzylinder 24 eine vorgegebene Menge Getränkepulver eingefüllt und gleichzeitig in den nächsten beiden Brühzylindern 24' das Getränk extrahiert wird. Damit kann mit dieser kompakten Einrichtung 10 auf effiziente Weise praktisch permanent ein Getränk durch zwei Auslässe trinkfertig in einen oder vorzugsweise mehrere Behälter, wie Tassen, gefüllt werden, bei dem bei voller Leistung nur kurze Unterbrüche des Getränkeauslasses beim Wechsel der beschickten Brühzylinder 24 in die um 60° gedrehte Extraktionspositionen bzw. beim Zurückschwenken der Kolben 31 von der jeweiligen Extraktions- in die Beschickungsposition entstehen.

Die Zufuhrkanäle 16 sind beim Beschicken mit Getränkepulver jeweils oberhalb eines Brühzylinders 24, 24' positioniert und die Kolben 31 unten dicht eingeschoben, während die Extraktionskolben 21 in je einen Brühzylinder 24' neben einem beschickbaren Brühzylinder 24 einschiebbar bzw. herausnehmbar angeordnet sind. Diesen Extraktionskolben 21 sind jeweils ein ventilgesteuerter Anschluss 21' für das Auslassen des Getränks in den Extraktionszellen im beschickten Brühzylinder 24' zugeordnet, während bei den Kolben 31 jeweils ein ventilgesteuerter Wasseranschluss 36 für das Auslassen des erzeugten Getränks ausgebildet ist.

Die je zwei Extraktionskolben 21 und Spülkolben 18 erstrecken sich von der diese haltenden Basisplatte 11 nach unten, so dass die Brühzylinder 24, 24' in diese einschiebbar sind. Die Spülkolben 18 für das Reinigen einer jeweiligen Extraktionszelle sind neben einem Brühzylinder 24' in der Extraktionsposition angeordnet. Ein jeweiliger Brühzylinder 24 ist über einen Spülkolben 18 dicht aufsetzbar bzw. von diesem wegnehmbar. Die Zufuhrkanäle 16, die Extraktionskolben 21 und die Spülkolben 18 in der Basisplatte 11 sind somit abwechslungsweise um je 60° um die Drehachse A herum in der Einheit 15 mit den Brühzylindern zusammenwirkend versetzt zueinander angeordnet. Sie bilden eine Kreisform, welche gleich wie diejenige der Brühzylinder dimensioniert ist.

In Fig. 3 bis Fig. 5 sind die Positionen von je zwei nebeneinander befindlichen Brühzylindern 24a, 24b der Einrichtung 10 nacheinander veranschaulicht. Es sind nicht nochmals alle Details erläutert. Es versteht sich von selbst, dass diese Positionen jeweils gleichzeitig auch von den um 180° versetzt angeordneten Brühzylindern 24 auf der andern Seite des Karussells 20 vorliegen und dasselbe ausgeführt wird, was nicht näher gezeigt ist.

Fig. 3 zeigt zwei der Brühzylinder 24a, 24b nebeneinander, von denen der Brühzylinder 24a links beim Beschicken des Getränkepulvers und der andere Brühzylinder 24b rechts beim Ausstossen eines Kuchens dargestellt ist. Diese Position wird mittels einer Verstellung des Schwenkorgans 30 nach oben erreicht, bei der dieser Kolben 31 in den Brühzylinder 24a eingeschoben ist und damit das Karussell 20 mit den Brühzylindern 24 mitgenommen und bis oben an die Basisplatte 11 als Anschlag hochgeschoben wird. Die Extraktionszelle 34a des Brühzylinders 24a ist unten durch den Kolben 31 dicht geschlossen und oben durch den Anschluss des Zufuhrkanals 16 und einer daran anschliessenden, die Basisplatte 11 durchdringenden Verbindungshülse 37 geöffnet, so dass in diese Extraktionszelle 34a das Getränkepulver portionenweise einfüllbar ist, welches vom Mahlwerk 12 gemahlen oder von einem Behälter aus gesteuert zugeführt wird. Diese Verbindungshülse 37 ragt vorzugsweise mit ihrer Unterseite in den Brühzylinder 24a und bewirkt damit einen dichten Anschluss und sie dient als oberer Anschlag des Karussells 20. Diese Positionen zum Beschicken des Getränkepulvers sind durch die fixen Anordnungen der Zufuhrkanäle 16 auf der Basisplatte 11 vorgegeben.

Beim anderen Brühzylinder 24b rechts ragt der Extraktionskolben 21 in diesem hochgeschobenen Zustand des Karussells 20 bis in den unteren Bereich der Extraktionszelle 34b und bewirkt ein Ausstossen des Getränkekuchens, der sich durch das vorgängige Extrahieren des Pulvers in diesem Brühzylinder 24b gebildet hat, was nachfolgend noch näher erläutert ist. Zu diesem Zwecke ist zwischen dem Kolben 31 und der Schale 32 unterhalb der unten offenen Extraktionszelle 34b ein Freiraum vorhanden und eine Öffnung 44 in der Auffangschale 40 ausgebildet, durch die der Kuchen in die erwähnte Schublade fallen kann.

Der Kolben 31 steht im unteren Ende des jeweiligen Brühzylinders 24a an, bei dem die Innenwandung 24' des Brühzylinders, welche die Extraktionszelle 34a bildet, von einer zylindrischen in eine kegelstumpfförmige Ausbildung 24" übergeht. Dies hat ausserdem den Vorteil, dass sich der in diesem konischen Bereich verbleibende Kuchen nach dem Extrahieren von der Innenwandung 24' leicht löst, wenn er vom Extraktionskolben 21 nach unten gedrückt wird.

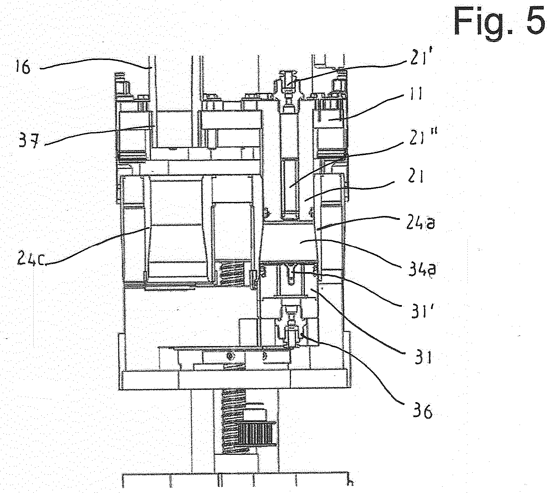

Gemäss Fig. 4 sind das Schwenkorgan 30 und das von ihm gehaltene Karussell 20 mit den Brühzylindern 24 nach dem Beladen der jeweiligen Extraktionszelle 34a durch Drehen der Antriebsspindel 25 soweit abgesenkt, dass der jeweilige Extraktionskolben 21 aus dem Brühzylinder 24b entfernt ist und dass damit das Karussell 20 mit den Brühzylindern 24 von den beiden in diesen verbleibenden Kolben 31 des Schwenkorgans 30 um 60° in die nächste Position gemäss Fig. 5 nach rechts drehbar sind, von dem knapp der halbe zurückgelegte Weg gezeigt ist.

Fig. 5 zeigt rechts die Position beim Extrahieren des Getränkepulvers, bei dem der Brühzylinder 24a durch den in diesem befindlichen Kolben 31 um 60° gedreht und folglich in den an der Basisplatte 11 nach unten vorstehenden Extraktionskolben 21 eingeschoben ist, wobei die Kolben 31 und der Lagerring 33 geschwenkt und diese vom gesteuerten Schwenkorgan 30 nach aufwärts hebbar sind. Es ist vorteilhaft, wenn der jeweilige Kolben soweit in der Extraktionszelle 34a hochgeschoben wird, dass das Getränkepulver etwas verdichtet wird. Die Extraktionszelle 34a befindet sich im kegelstumpfförmigen Bereich der Innenwandung 24'. Es ist ferner noch der in die Beschickungsposition geschwenkte Brühzylinder 24c ersichtlich.

Beim Brühvorgang wird kaltes, warmes oder heisses Wasser vom ventilgesteuerten Wasseranschluss 36 vorzugsweise mit Druck durch wenigstens eine Bohrung 31' im Kolben 31 und durch das Pulver gepresst und damit insbesondere gebrüht. Das erzeugte Getränk, insbesondere Kaffee, wird anschliessend durch wenigstens eine Bohrung 21" im Extraktionskolben 21 zum ventilgesteuerten Anschluss 21' und von diesem zu einem nicht näher gezeigten Auslass befördert. Das Wasser könnte jeweils bei dieser Extraktion auch umgekehrt von oben statt von unten durch den Extraktionskolben und durch das Pulver und durch den Kolben 31 zu einem Getränkeauslass geleitet werden.

Nach dem Extrahieren wird die Einrichtung 10 in die ausgefahrene Stellung, wie in Fig. 2 ersichtlich ist, gebracht, bei der die Kolben 31 jeweils aus den jeweiligen Brühzylindern 24a nach unten ausgeschoben und zu dem zur Beschickung gelangten Brühzylinder 24c zurückgeschwenkt und in diesen eingeschoben werden. Zu diesem Zwecke ist das an sich vom Schwenkorgan 20 gehaltene Karussell 20 von einem nicht näher gezeigten Arretiermittel in einer Höhenposition lösbar arretiert, bei dem die Kolben 31 unten und die Extraktionskolben 21 oben aus den Brühzylindern ausgefahren sind.

Gleichzeitig bei der Beschickung wird in den Brühzylindern 24a der Getränkekuchen ausgestossen und beim erneuten Rotieren des Karussells 20, bei dem die Brühzylinder 24c in die Extraktionsposition gefahren werden, werden die gegenüberliegenden Brühzylinder 24a unterhalb die mit je einem Wasseranschluss 18' versehenen Spülkolben 18 gebracht und in der hochgeschobenen Position des Schwenkorgans und des Karussells, welche derjenigen gemäss Fig. 3 entspricht, wird eine Spülung im Brühzylinder 24a gesteuert durchgeführt. Anschliessend wird er abgesenkt, geschwenkt und weiter zum andern Auslaufkanal 16 rückseitig für ein Beschicken hochgefahren.

Die Erfindung ist mit den obigen Ausführungsbeispielen ausreichend dargetan. Sie könnte aber noch durch weitere Varianten erläutert sein. Anstelle von diesem Schwenkorgan könnten die Kolben auch einzeln schwenk- oder verstellbar angeordnet sein. Auch die modulare Einheit 15 mit dem Mahlwerk und den Zuführkanälen könnte anders ausgebildet sein.

Im Prinzip könnte das Karussell aus vier Brühzylindern bestehen, bei dem die Funktionen des Extrahierens, des Ausstossens des Kuchens und das Spülen der Extraktionszellen in einer Position erfolgen würde. Die Einrichtung eignet sich aber auch für das Vorsehen von mehr als sechs, wie zum Beispiel neun Brühzylindern, bei denen jeweils drei Zufuhrkanäle, drei Kolben, drei Spülkolben und drei Auslässe vorhanden wären.

Das Karussell mit den mehreren Brühzylindern bzw. das Schwenkorgan könnte fix angeordnet und die Zufuhrkanäle und die Extraktionskolben zusammen oder separat voneinander höhenverstellbar sein.

Diese vertikale Antriebsspindel 25 ist als Gewindestange ausgebildet. Sie könnte aber auch als Zahnradstange mit einem Ritzelantrieb im Schwenkorgan, elektromagnetisch oder ähnlich ausgebildet sein. Ebenso könnte die Gleitführung 27 anders als durch nebeneinander angeordnete Führungsstangen ausgebildet sein, wie als Führungsrohr oder dergleichen. Auch das Antriebsorgan 22 könnte als Elektromotor direkt mit der Antriebsspindel gekoppelt sein.

Das Antriebselement könnte auch so ausgebildet sein, dass es gleichzeitig ein Auf- und Abwärtsbewegen des Schwenkorgans und auch ein Verschwenken der Kolben 31 bewirken würde.

## Patentansprüche

1. Einrichtung zur Erzeugung eines Getränks, insbesondere Kaffee, die mehrere karussellartig um eine Drehachse verstellbare Brühzylinder (24) mit je einer Extraktionszelle (34a, 34b), oberhalb dieser wenigstens einen Zufuhrkanal (16) für das Getränkepulver sowie einen Extraktionskolben (21) und unterhalb der Brühzylinder (24) mindestens zwei Kolben (31) aufweist, **dadurch gekennzeichnet, dass**
die mindestens zwei unterhalb der Brühzylinder (24) befindlichen Kolben (31) derart positioniert sind, dass sie jeweils in einen Brühzylinder (24) ein- oder aus diesem herausschiebbar sind, wobei oberhalb der Brühzylinder (24) mindestens zwei Zufuhrkanäle (16) und mindestens zwei beabstandet zu diesen angeordnete Extraktionskolben (21) vorgesehen sind, wobei die Zufuhrkanäle (16) in einer bestimmten Position der Brühzylinder (24) jeweils oberhalb eines Brühzylinders (24) für das Beschicken des Getränkepulvers anschliessbar sind, in welche je ein Kolben (31) von unten einschiebbar ist, während die Extraktionskolben (21) jeweils in einen Brühzylinder (24) neben dem durch jeweils einen Zufuhrkanal (16) beschickbaren Brühzylinder (24) ein- oder aus diesem ausschiebbar angeordnet sind.

2. Einrichtung nach Anspruch 1, **dadurch gekennzeichnet, dass** nach dem Herausbewegen und Wegschwenken der Kolben (31) aus jeweils einem Brühzylinder (24) und Hochbewegen in einen jeweiligen zu beschickenden benachbarten Brühzylinder (24) durch die Extraktionskolben (21) jeweils in dem vom Kolben freigegebenen Brühzylinder (24) der extrahierte Kuchen nach unten ausstossbar ist.

3. Einrichtung nach Anspruch 1 oder 2, **dadurch gekennzeichnet, dass** in der Position beim Beschicken des Getränkepulvers die beiden Kolben (31) in je einen der Brühzylinder (24) eingeschoben sind, wobei sie in diesen Brühzylindern (24) im eingeschobenen Zustand verbleiben, wenn sie und mit ihnen die Brühzylinder (24) abgesenkt, in die nächste Position verschwenkt und wieder hochgeschoben werden, dies bis die von den Kolben (31) bewegten Brühzylinder(24) jeweils in den Extraktionskolben (21) eingeschoben sind.

4. Einrichtung nach einem der Ansprüche 1 bis 3, **dadurch gekennzeichnet, dass**
zumindest zwei Spülkolben (18) für das Reinigen einer jeweiligen Extraktionszelle (34a, 34b) in einem Brühzylinder (24) jeweils neben einem Brühzylinder (24) in der Extraktionsposition einschiebbar bzw. herausnehmbar angeordnet sind.

5. Einrichtung nach einem der Ansprüche 1 bis 4, **dadurch gekennzeichnet, dass**
die achsparallel zueinander angeordneten Brühzylinder (24) kreisförmig um eine Drehachse (A) in einem Karussell (20) gehalten sind, welches vorzugsweise von einer vertikalen Gleitführung (27) gegen die Zufuhrkanäle (16) und die Extraktionskolben (21) hin bzw. von diesen weg bewegbar ist.

6. Einrichtung nach Anspruch 5, **dadurch gekennzeichnet, dass** sechs Brühzylinder (24) mit je einem Abstand von 60° zueinander im Karussell (20) gehalten sind, wobei die zwei Zufuhrkanäle (16) und die zwei Extraktionskolben (21) in einer bestimmten Position derselben mit je einem Brühzylinder (24) zusammenwirken, die zueinander um 180° versetzt gegenüberliegen.

7. Einrichtung nach einem der Ansprüche 1 bis 6, **dadurch gekennzeichnet, dass**
ein unterhalb der Brühzylinder (24) positioniertes Schwenkorgan (30) mit den mindestens zwei Kolben (31) an einer Gleitführung (27) auf- und abbewegbar ist, wobei dieses Schwenkorgan (30) durch ein Antriebselement zumindest höhenverstellbar ist und zumindest die Kolben (31) von einem zusätzlichen Antriebsorgan (41) am Schwenkorgan schwenkbar gehalten sind.

8. Einrichtung nach Anspruch 7, **dadurch gekennzeichnet, dass** als Antriebselement des Schwenkorgans (30) eine vertikale Antriebsspindel (25) vorzugsweise im Zentrum der Einrichtung (10) vorgesehen ist, welche mit dem Schwenkorgan (30) drehverbunden ist.

9. Einrichtung nach Anspruch 8, **dadurch gekennzeichnet, dass** sich die vertikale Antriebsspindel (25) und parallel zu ihr die Gleitführung (27) von einer unteren Auffangschale (40) durch das Schwenkorgan (40) und das Karussell (20) bis zu einem Drehantriebsorgan (22) einer oberen Einheit (15) erstreckt.

10. Einrichtung nach einem der Ansprüche 7 bis 9, **dadurch gekennzeichnet, dass**
das Karussell (20) mit den Brühzylindern (24) vom wirkverbundenen Schwenkorgan (30) bzw. den Kolben (31) absenkbar und in die nächste Position verdrehbar und hochschiebbar ist.

11. Einrichtung nach einem der Ansprüche 7 bis 10, **dadurch gekennzeichnet, dass**
das vom Schwenkorgan (30) gehaltene Karussell (20) von einem Arretiermittel in einer Höhenposition lösbar arretierbar ist, bei dem bei abgesenktem Schwenkorgan (30) die Kolben (31) unten und die Extraktionskolben (21) oben aus den Brühzylindern (24) ausgefahren sind.

12. Einrichtung nach einem der Ansprüche 1 bis 11, **dadurch gekennzeichnet, dass**
die Zufuhrkanäle (16), die Extraktionskolben (21) und die Spülkolben (18) abwechslungsweise um die Drehachse (A) herum in einer modularen Einheit (15) mit den Brühzylindern (24) zusammenwirkend angeordnet sind.

13. Einrichtung nach Anspruch 12, **dadurch gekennzeichnet, dass** in der modularen Einheit (15) zumindest ein Mahlwerk (12) mit einem Antrieb (14) und wenigstens ein von dieser wegführendes Verbindungsstück (17) für die Versorgung des Getränkepulvers in die Zufuhrkanäle (16) eingebaut ist.

14. Einrichtung nach Anspruch 12 oder 13, **dadurch gekennzeichnet, dass**
in der modularen Einheit (15) ein Drehantriebsorgan (22) für die in dieser gelagerten vertikalen Antriebsspindel (15) angeordnet ist.

15. Einrichtung nach einem der Ansprüche 1 bis 14, **dadurch gekennzeichnet, dass**
dem Kolben (31) jeweils ein Wasseranschluss (36) für das Extrahieren des Getränks im beschickten Brühzylinder (24b) zugeordnet ist, während bei den Extraktionskolben (21) jeweils ein Anschluss (21') für das Auslassen des erzeugten Getränks aus der Extraktionszelle (34b) des Brühzylinders (24b) vorgesehen ist.

16. Einrichtung nach einem der Ansprüche 1 bis 15, **dadurch gekennzeichnet, dass**
eine Struktur vorgesehen ist, die in vier voneinander getrennte Ebenen (E1 bis E4) unterteilt ist, bei der in der ersten Ebene (E1) eine vorzugsweise modulare Einheit (15) mit den Zuführkanälen (16) für das Getränkepulver, den Extraktionskolben (21) und den Spülkolben (18), eine zweite Ebene (E2) mit den Brühzylindern (24), eine dritte Ebene (E3) mit den Kolben (31) und eine vierte Ebene (E4) mit vorzugsweise einer Auffangschale (40) positioniert ist.

17. Einrichtung nach Anspruch 16, **dadurch gekennzeichnet, dass** die modulare Einheit (15) der ersten und die Auffangschale (40) der vierte Ebene (E1, E4) stationär angeordnet sind und die vertikale Antriebsspindel (25) und die Gleitführung (27) zwischen diesen erstreckend angeordnet und von diesen gehalten sind.

18. Einrichtung nach Anspruch 17, **dadurch gekennzeichnet, dass** die Brühzylinder (24) in der zweiten Ebene (E2) und die Kolben (31) in der dritten Ebene (E3) in verschiedene bestimmte Positionen höhenverstellbar angeordnet sind.

19. Einrichtung nach Anspruch 17, **dadurch gekennzeichnet, dass** ein Karussell (20) mit den Brühzylindern (24) in der zweiten Ebene (E2) und ein Schwenkorgan (30) mit den Kolben (31) in der dritten Ebene (E3) angeordnet sind.

## Claims

1. A device for generating a beverage, in particular coffee, which comprises a plurality of carousel-like brewing cylinders (24) that are adjustable about an axis of rotation, each having an extraction cell (34a, 34b), above which there is at least one supply passage (16) for the beverage powder as well as an extraction piston (21), and below the brewing cylinders (24) there are at least two pistons (31), **characterised in that** the at least two pistons (31) located below the brewing cylinders (24) are positioned such that they are each slidable into or out of a respective brewing cylinder (24), wherein at least two supply channels (16) and at least two extraction pistons (21) arranged spaced apart therefrom are provided above the brewing cylinders (24), wherein, in a given position of the brewing cylinders (24), the supply channels (16) are connectable above a respective brewing cylinder (24) for loading the beverage powder, into which one respective piston (31) can be inserted from below, while the extraction pistons (21) are arranged so as to be slidable into or out of a brewing cylinder (24) adjacent to the respective brewing cylinder (24) that is loaded by each supply channel (16).

2. The device according to claim 1, **characterised in that**, after the pistons (31) are moved out of and pivoted away from a respective brewing cylinder (24) and moved upward into a respective adjacent brewing cylinder (24) to be loaded, the extracted cake can be ejected downwardly by the extraction pistons (21) into the respective brewing cylinder (24) released by the piston.

3. The device according to claim 1 or 2, **characterised in that**, in the position when loading the beverage powder, the two pistons (31) are inserted into a respective one of the brewing cylinders (24), wherein they remain in these brewing cylinders (24) in the inserted state when they, and with them the brewing cylinders (24), are lowered, pivoted into the next position, and pushed up again, until the brewing cylinders (24) moved by the pistons (31) are inserted into the respective extraction piston (21).

4. The device according to any one of claims 1 to 3, **characterised in that** at least two rinsing pistons (18) for cleaning a respective extraction cell (34a, 34b) are arranged so as to be inserted and removed in a respective brewing cylinder (24) adjacent to a brewing cylinder (24) in the extraction position.

5. The device according to any one of claims 1 to 4, **characterised in that** the brewing cylinders (24) arranged axially parallel to one another are held in a circular manner around an axis of rotation (A) in a carousel (20), which is preferably movable by a vertical sliding guide (27) towards and away from the supply channels (16) and the extraction pistons (21), respectively.

6. The device according to claim 5, **characterised in that** six brewing cylinders (24) are held in the carousel (20), each at a distance of 60° from one another, wherein the two supply channels (16) and the two extraction pistons (21) cooperate with a respective brewing cylinder (24) in a given position of the former, being arranged opposite one another by 180°.

7. The device according to any one of claims 1 to 6, **characterised in that** a pivot member (30) positioned below the brewing cylinders (24) with the at least two pistons (31) is movable up and down on a sliding guide (27), wherein this pivot member (30) is at least height-adjustable by a drive element, and at least the pistons (31) are held so as to be pivotable by an additional drive member (41) on the pivot member.

8. The device according to claim 7, **characterised in that** a vertical drive spindle (25) is provided as the drive element of the pivot member (30), preferably in the centre of the device (10), which is rotationally connected to the pivot member (30).

9. The device according to claim 8, **characterised in that** the vertical drive spindle (25), and parallel thereto the sliding guide (27), extend from a lower collecting pan (40) through the pivot member (40) and the carousel (20) up to a rotary drive member (22) of an upper unit (15).

10. The device according to any one of claims 7 to 9, **characterised in that** the carousel (20) with the brewing cylinders (24) can be lowered by the operatively connected pivot member (30) and pistons (31), respectively, and can be rotated and pushed up into the next position.

11. The device according to any one of claims 7 to 10, **characterised in that** the carousel (20) held by the pivot member (30) can be releasably locked by a locking means in an elevated position in which, when the pivot member (30) is lowered, the pistons (31) below and the extraction pistons (21) above are extended out of the brewing cylinders (24).

12. The device according to any one of claims 1 to 11, **characterised in that** the supply channels (16), the extraction pistons (21), and the rinsing pistons (18) are arranged in an alternating fashion about the axis of rotation (A) in a modular unit (15) so as to cooperate with the brewing cylinders (24).

13. The device according to claim 12, **characterised in that**, for supplying the beverage powder into the supply channels (16), at least one grinder (12) is installed in the modular unit (15), with a drive (14) and at least one connection piece (17) leading away therefrom.

14. The device according to claim 12 or 13, **characterised in that**, a rotary drive member (22) is arranged in the modular unit (15) for the vertical drive spindle (15) which is supported therein.

15. The device according to any one of claims 1 to 14, **characterised in that** each piston (31) is associated with a respective water port (36) for extracting the beverage in the loaded brewing cylinder (24b), while a respective port (21') for discharging the generated beverage out of the extraction cell (34b) of the brewing cylinder (24b) is provided at each of the extraction pistons (21).

16. The device according to any one of claims 1 to 15, **characterised in that** a structure is provided, which is subdivided into four distinct planes (E1 to E4), in which a preferably modular unit (15) with the supply channels (16) for the beverage powder, the extraction piston (21), and the rinsing piston (18) is positioned in the first plane (E1), the brewing cylinders (24) in a second plane (E2), the pistons (31) in a third plane (E3), and preferably a collecting pan (40) in a fourth plane (E4).

17. The device according to claim 16, **characterised in that** the modular unit (15) of the first and the collecting pan (40) of the fourth plane (E1, E4) are arranged so as to be stationary, and the vertical drive spindle (25) and the sliding guide (27) are arranged so as to extend therebetween and are held by them.

18. The device according to claim 17, **characterised in that** the brewing cylinders (24) in the second plane (E2) and the pistons (31) in the third plane (E3) are height-adjustable into various specified positions.

19. The device according to claim 17, **characterised in that** a carousel (20) with the brewing cylinders (24) is arranged in the second plane (E2), and a pivot member (30) with the pistons (31) is arranged in the third plane (E3).

## Revendications

1. Dispositif pour la préparation d'une boisson, notamment du café, comprenant plusieurs cylindres d'infusion (24) disposés en carrousel autour d'un axe de rotation, chacun doté d'une cellule d'extraction (34a, 34b). Au-dessus de ces cylindres se trouvent au moins un canal d'alimentation (16) pour la poudre de boisson et un piston d'extraction (21), tandis qu'en dessous se trouvent au moins deux pistons (31). Ces derniers sont positionnés de manière à pouvoir être insérés ou retirés de chaque cylindre d'infusion (24). Au-dessus des cylindres d'infusion (24) se trouvent au moins deux canaux d'alimentation (16) et deux pistons d'extraction (21) espacés. Les canaux d'alimentation (16) peuvent être raccordés à un cylindre d'infusion (24) dans une position spécifique pour l'alimentation en poudre de boisson, dans lequel un piston (31) peut être inséré par le bas, tandis que les pistons d'extraction (21) peuvent être insérés ou retirés d'un cylindre d'infusion (24) adjacent à celui alimenté par un canal d'alimentation (16).

2. Dispositif selon la revendication 1, **caractérisé en ce que**, après avoir sorti et pivoté les pistons (31) d'un cylindre d'infusion (24) et les avoir remontés dans un cylindre d'infusion (24) adjacent à charger, le gâteau extrait peut être éjecté vers le bas dans le cylindre d'infusion (24) libéré par le piston, grâce aux pistons d'extraction (21).

3. Dispositif selon la revendication 1 ou 2, **caractérisé en ce que**, lors du chargement de la poudre de boisson, les deux pistons (31) sont insérés chacun dans l'un des cylindres d'infusion (24), et y restent à l'état inséré lorsque les cylindres d'infusion (24) sont abaissés, pivotés vers la position suivante et remontés, jusqu'à ce que les cylindres d'infusion (24) actionnés par les pistons (31) soient insérés dans les pistons d'extraction (21).

4. Dispositif selon l'une quelconque des revendications 1 à 3, **caractérisé en ce qu'**au moins deux pistons de rinçage (18) destinés au nettoyage d'une cellule d'extraction respective (34a, 34b) dans un cylindre d'infusion (24) sont disposés de manière à pouvoir être insérés ou retirés chacun à côté d'un cylindre d'infusion (24) en position d'extraction.

5. Dispositif selon l'une quelconque des revendications 1 à 4, **caractérisé en ce que** les cylindres d'infusion (24), disposés parallèlement entre eux, sont maintenus en cercle autour d'un axe de rotation (A) dans un carrousel (20), lequel est de préférence déplaçable par un guide coulissant vertical (27) vers les canaux d'alimentation (16) et les pistons d'extraction (21) ou à l'écart de ceux-ci.

6. Dispositif selon la revendication 5, **caractérisé en ce que** six cylindres de percolation (24) sont maintenus dans le carrousel (20) à une distance de 60° les uns des autres, les deux canaux d'alimentation (16) et les deux pistons d'extraction (21) coopérant chacun avec un cylindre de percolation (24) dans une position déterminée, les cylindres étant décalés de 180° l'un par rapport à l'autre.

7. Dispositif selon l'une quelconque des revendications 1 à 6, **caractérisé en ce qu'**un organe pivotant (30) positionné sous les cylindres de percolation (24) peut être déplacé de haut en bas avec au moins deux pistons (31) sur un guide coulissant (27), cet organe pivotant (30) étant au moins réglable en hauteur par un élément d'entraînement et au moins les pistons (31) étant maintenus pivotants sur l'organe pivotant par un organe d'entraînement supplémentaire (41).

8. Dispositif selon la revendication 7, **caractérisé en ce que** l'élément d'entraînement de l'organe pivotant (30) est une broche d'entraînement verticale (25), de préférence située au centre du dispositif (10), et reliée en rotation à l'organe pivotant (30).

9. Dispositif selon la revendication 8, **caractérisé en ce que** la broche d'entraînement verticale (25) et, parallèlement à celle-ci, le guide coulissant (27) s'étendent depuis un bac de récupération inférieur (40), à travers l'organe pivotant (40) et le carrousel (20), jusqu'à un organe d'entraînement rotatif (22) d'une unité supérieure (15).

10. Dispositif selon l'une quelconque des revendications 7 à 9, **caractérisé en ce que** le carrousel (20) avec les cylindres de percolation (24) peut être abaissé par l'organe pivotant (30) ou les pistons (31) qui lui sont reliés, puis tourné et remonté dans la position suivante.

11. Dispositif selon l'une quelconque des revendications 7 à 10, **caractérisé en ce que** le carrousel (20) maintenu par l'organe pivotant (30) peut être bloqué de manière amovible en position haute par un moyen de verrouillage, dans laquelle, lorsque l'organe pivotant (30) est abaissé, les pistons (31) sont sortis des cylindres de percolation (24) par le bas et les pistons d'extraction (21) par le haut.

12. Dispositif selon l'une quelconque des revendications 1 à 11, **caractérisé en ce que** les canaux d'alimentation (16), les pistons d'extraction (21) et les pistons de rinçage (18) sont disposés alternativement autour de l'axe de rotation (A) dans une unité modulaire (15) en coopération avec les cylindres de percolation (24).

13. Dispositif selon la revendication 12, **caractérisé en ce que** l'unité modulaire (15) intègre au moins un broyeur (12) avec un entraînement (14) et au moins une pièce de raccordement (17) qui en part pour alimenter les canaux d'alimentation (16) en poudre de boisson.

14. Dispositif selon la revendication 12 ou 13, **caractérisé en ce que** l'unité modulaire (15) comporte un organe d'entraînement rotatif (22) pour la broche d'entraînement verticale (15) qui y est montée.

15. Dispositif selon l'une quelconque des revendications 1 à 14, **caractérisé en ce que** chaque piston (31) est associé à un raccord d'eau (36) pour l'extraction de la boisson dans le cylindre d'infusion (24b) chargé, tandis que chaque piston d'extraction (21) est pourvu d'un raccord (21') pour l'évacuation de la boisson produite de la cellule d'extraction (34b) du cylindre d'infusion (24b).

16. Dispositif selon l'une quelconque des revendications 1 à 15, **caractérisé en ce qu'**il comprend une structure divisée en quatre niveaux distincts (E1 à E4), avec, au premier niveau (E1), une unité de préférence modulaire (15) comprenant les canaux d'alimentation (16) pour la poudre de boisson, le piston d'extraction (21) et le piston de rinçage (18), au deuxième niveau (E2) les cylindres d'infusion (24), au troisième niveau (E3) les pistons (31) et au quatrième niveau (E4) de préférence un bac de récupération (40).

17. Dispositif selon la revendication 16, **caractérisé en ce que** l'unité modulaire (15) du premier niveau (E1) et le bac de récupération (40) du quatrième niveau (E4) sont fixes, tandis que la broche d'entraînement verticale (25) et le guide de coulissement (27) s'étendent entre eux et sont maintenus par ceux-ci.

18. Dispositif selon la revendication 17, **caractérisé en ce que** les cylindres de percolation (24) sont disposés dans le deuxième plan (E2) et les pistons (31) dans le troisième plan (E3), et sont réglables en hauteur dans différentes positions prédéfinies.

19. Dispositif selon la revendication 17, **caractérisé en ce qu'**un carrousel (20) avec les cylindres de percolation (24) est disposé dans le deuxième plan (E2) et un organe pivotant (30) avec les pistons (31) est disposé dans le troisième plan (E3).
